# EUROPÄISCHE PATENTSCHRIFT

(11) **EP 1 483 622 B1**
(45) Veröffentlichungstag und Bekanntmachung des Hinweises auf die Patenterteilung: **18.06.2008**
(21) Anmeldenummer: 03717189.9
(22) Anmeldetag: 19.02.2003
(51) Int. Cl.: G03B 21/10, H04N 1/195

(54) **AUFLAGEFLÄCHE EINES GERÄTS ZUR OPTISCHEN AUFNAHME VON OBJEKTEN**
SUPPORT SURFACE OF A DEVICE FOR OPTICALLY CAPTURING OBJECTS
SURFACE DE SUPPORT D'UN APPAREIL DESTINE A LA PRISE DE VUES OPTIQUE D'OBJETS

(30) Priorität: 08.03.2002 DE 10210322
(43) Veröffentlichungstag der Anmeldung: 08.12.2004
(73) Patentinhaber: Wolfvision GmbH, 6840 Götzis (AT)
(72) Erfinder: WOLF, Martin, A-6833 Klaus (AT)
(74) Vertreter: Kaminski, Susanne
(86) Internationale Anmeldenummer: PCT/EP2003/001654
(87) Internationale Veröffentlichungsnummer: WO 2003/077025

(56) Entgegenhaltungen:
- US-A- 5 027 219
- US-A- 5 642 206
- US-A- 5 947 577
- PATENT ABSTRACTS OF JAPAN vol. 1996, no. 11, 29. November 1996 (1996-11-29) & JP 08 186741 A (NEC CORP), 16. Juli 1996 (1996-07-16)
- PATENT ABSTRACTS OF JAPAN vol. 013, no. 350 (E-800), 7. August 1989 (1989-08-07) & JP 01 108873 A (CANON INC), 26. April 1989 (1989-04-26)

## Beschreibung

Die Erfindung betrifft ein Gerät zur optischen Aufnahme von Objekten mit einer Auflagefläche, auf die ein Objekt auflegbar ist, nach dem Oberbegriff des Anspruches 1.

Derartige Geräte verfügen neben einer Auflagefläche zudem über eine Lichtquelle zur Beleuchtung der Auflagefläche sowie über eine Aufnahmeeinrichtung zur optischen Aufnahme eines auf die Auflagefläche aufgelegten Objekts. Die Aufnahmeeinrichtung bzw. die Lichtquelle werden im Betriebszustand des Geräts über Halterungen in einer bestimmten Position zueinander und relativ zur Auflagefläche gehalten.

Die von der Lichtquelle ausgehenden Beleuchtungsstrahlen werden von der Auflagefläche je nach Oberflächenbeschaffenheit in verschiedene Richtungen gestreut reflektiert bzw. in einer ausgezeichneten Richtung mit grosser Intensität gerichtet reflektiert. Bei der gerichteten Reflexion entspricht der Ausfallswinkel dem Einfallswinkel der Beleuchtungsstrahlen auf die Auflagefläche. In bestimmten Positionen der Lichtquelle bzw. der Aufnahmeeinrichtung relativ zur Auflagefläche kann die Auflagefläche einen Bereich aufweisen, wo Beleuchtungsstrahlen gerichtet in Richtung der Aufnahmeeinrichtung reflektiert werden. Gerichtet in Richtung der Aufnahmeeinrichtung reflektierte Beleuchtungsstrahlen können dabei Intensitäten erreichen, die die Qualität optischer Aufnahmen erheblich reduzieren. Diese gerichteten Reflexionen werden Störreflexionen bzw. Spiegelungen genannt.

Durch eine geeignete Oberflächenbeschaffenheit der Auflagefläche - beispielsweise durch eine mit einem entsprechenden Farbanstrich versehene, aufgerauhte Oberfläche - kann bekanntermassen erreicht werden, dass die Beleuchtungsstrahlen in verschiedenen Richtungen gestreut reflektiert werden. Damit können direkt durch die Oberfläche der Auflagefläche verursachte Störreflexionen weitgehend verhindert werden. Wird jedoch ein Objekt mit einer stark gerichtet reflektierenden Oberfläche, wie zum Beispiel ein Druckerzeugnis aus Hochglanzpapier, eine Fotografie oder eine Folie beispielsweise für einen Overheadprojektor, flächig auf eine solche Auflagefläche aufgelegt und beleuchtet, so können die Störreflexionen so stark werden, dass optische Aufnahmen durch die Aufnahmeeinrichtung nicht mehr möglich sind.

In an sich bekannter Weise können durch einen entsprechend gross gewählten Abstand der Lichtquelle von der Aufnahmeeinrichtung bzw. von der Auflagefläche Störreflexionen verhindert werden. Eine derart weit entfernte Positionierung der Lichtquelle erfordert aber in der Regel mehrere Lichtquellen, damit eine oft notwendige, gleichmässige Beleuchtung der Auflagefläche erreicht wird. Zudem benötigt diese entfernte Positionierung entsprechend grosse Haltearme bzw. Ausleger, was zu klobigen und aufwändigen Geräten führt.

Aus der EP 0 362 737 B1 ist ein Gerät bekannt, bei dem durch über ein Objektiv projizierte Beleuchtungsstrahlen, die in kleinen Winkeln - insbesondere kleiner als 2° - zur optischen Achse der Aufnahmeeinrichtung ausgerichtet sind, störende Spiegelungen weitgehend vermieden werden. Diese Art der Beleuchtung erfordert - wie oben beschrieben - einen grossen Abstand der Lichtquelle bzw. der Aufnahmeeinrichtung von der Auflagefläche. Dies wird bei diesem Gerät durch eine indirekte Projektion der Beleuchtungsstrahlen bzw. eine indirekte Abbildung der Aufnahmestrahlen über einen Spiegel erzielt. Auch ist bei diesem Gerät ein teures, der Lichtquelle zugeordnetes Projektionsobjektiv erforderlich.

Der Erfindung liegt daher die Aufgabe zugrunde, Mängel des Standes der Technik zu beheben. Insbesondere soll ein Gerät zur optischen Aufnahme von Objekten vorgeschlagen werden, welches durch einfache Mittel Störreflexionen bzw. Spiegelungen im Wesentlichen verhindert.

Diese Aufgabe wird durch ein Gerät zur optischen Aufnahme von Objekten gelöst, bei dem die kennzeichnenden Merkmale des unabhängigen Patentanspruchs 1 verwirklicht sind.

Weitere vorteilhafte oder alternative Aus- bzw. Weiterbildungen der Erfindung sind in den Merkmalen der abhängigen Patentansprüche beschrieben.

Wenn im Zusammenhang mit der Erfindung von Objekten die Rede ist, so sollen im weitesten Sinne sowohl graphische Informationsaufzeichnungen, wie Textseiten, Schriftstücke, Druckerzeugnisse, sowie Bilder im herkömmlichen Sinn, wie Fotografien, Diapositive oder Zeichnungen, aber auch Gegenstände, wie Bauteile, Baumuster oder Prototypen zu verstehen sein.

Im Gegensatz zum Stand der Technik weist ein erfindungsgemässes Gerät eine Auflagefläche auf, deren gegebenenfalls Störreflexionen verursachender Bereich mit einer Wölbung versehen ist. Erfindungsgemäss wird durch das Vorsehen einer solchen.Wölbung verhindert, dass Beleuchtungsstrahlen gerichtet und mit hoher Intensität in Richtung der Aufnahmeeinrichtung reflektierbar sind.

Eine Weiterbildung der Erfindung sieht vor, auf der Aufnahmefläche einen hinterleuchtet ausgebildeten Aufnahmebereich an einer ausgezeichneten Stelle vorzusehen, der für die optische Aufnahme von Diapositiven geeignet ist. An diesen Aufnahmebereich anschliessend kann gegebenenfalls ein ebenfalls hinterleuchteter Vorschaubereich für weitere Diapositive vorgesehen werden. Über zusätzlich angebrachte Positionierhilfen kann eine optische Aufnahme von Diapositiven weiter vereinfacht werden.

Nachstehend wird die Erfindung anhand der Figuren der Zeichnung rein beispielhaft näher erörtert. Gleiche Teile in unterschiedlichen Ausführungsbeispielen, welche dieselben Funktionen ausüben, sind nachstehend mit gleichen Bezeichnungen und Bezugszeichen versehen. Es zeigen:
- Figur 1: ein erfindungsgemässes Gerät zur Aufnahme von Objekten im teilweisen Schnitt in Seitenansicht und
- Figur 2: ein weiteres Ausführungsbeispiel eines erfindungsgemässen Geräts mit einem hinterleuchteten Diapositiv-Aufnahmebereich in Schrägansicht.

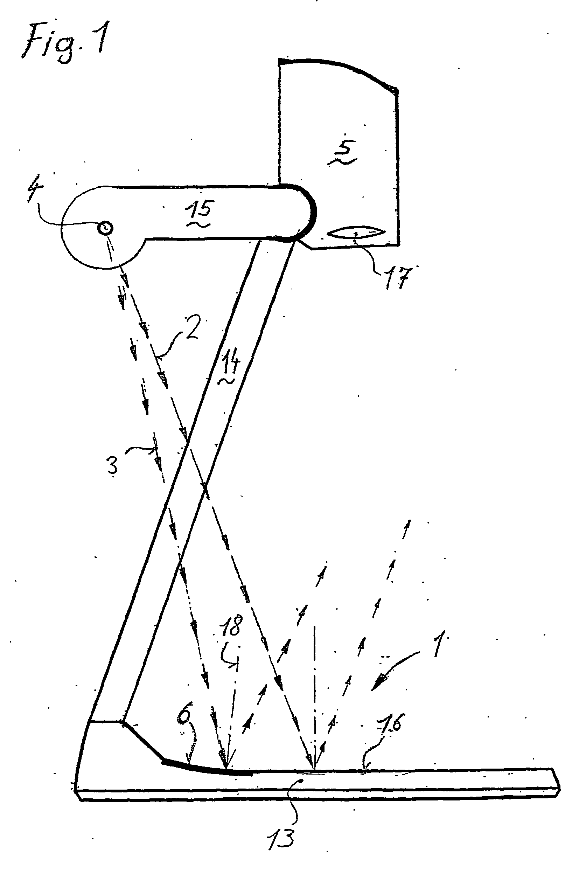

Figur 1 zeigt ein erfindungsgemässes Gerät zur Aufnahme von Objekten in Gebrauchsstellung in Seitenansicht. Das Gerät weist ein Basisgehäuse 13, dem eine Auflagefläche 1 zugeordnet ist, einen Haltearm 14, einen Ausleger 15, eine Lichtquelle 4 und eine Aufnahmeeinrichtung 5 auf. Die Auflagefläche 1 bildet hier im Wesentlichen die Oberseite des Basisgehäuses 13 und ist der Aufnahmeeinrichtung 5 zugewandt.

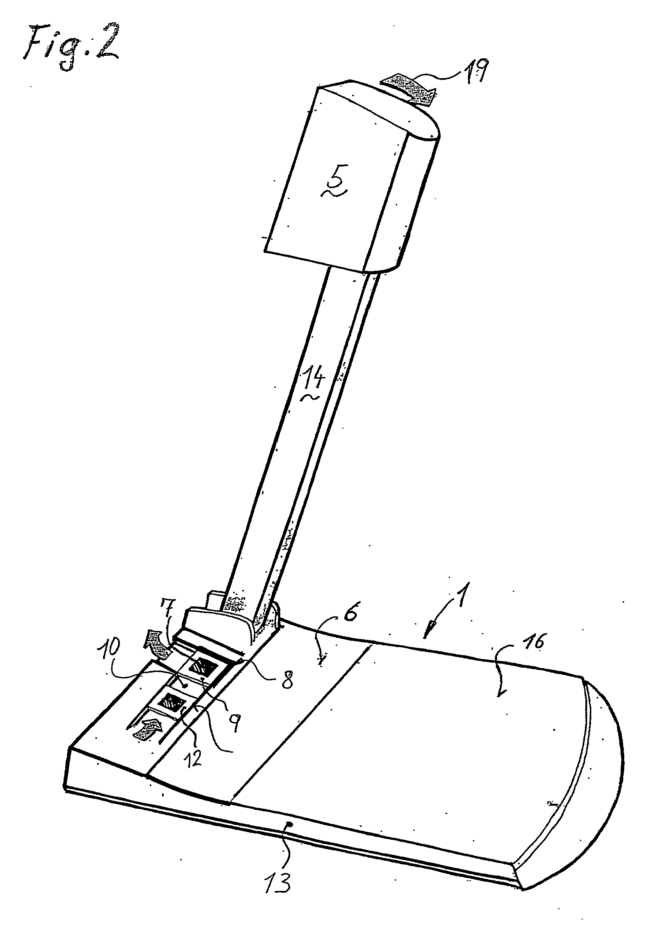

Die Auflagefläche 1 weist einen mit einer Wölbung versehenen Teilbereich 6 und einen an diesen anschliessenden, ebenen Bereich 16 auf. In diesem Ausführungsbeispiel ist - wie aus Figur 2 gut zu ersehen ist - der gewölbte Teilbereich 6 senkrecht zur Zeichnungsebene aus Figur 1 angeordnet, weist eine mittlere Krümmung auf und geht stetig in den ebenen Bereich 16 über.

Die Aufnahmeeinrichtung 5 ist hier um eine horizontale Achse kippbar am Haltearm 14 befestigt. Sie wird über den Haltearm 14 in einer bestimmten Position relativ zur Auflagefläche 1 gehalten. Die Aufnahmeeinrichtung 5 ist hier z. B. mit einer Digitalkamera versehen, von der nur die Objektivlinse 17 schematisch dargestellt ist. Bei einer optischen Aufnahme werden in an sich bekannter Weise über die Objektivlinse 17 Strahlen eingesammelt, eine Abbildung erzeugt und z.B. von einem CCD-Array in der Digitalkamera in elektrische Signale umgewandelt. Die optische Achse der über dem Zentrum der Auflagefläche 1 positionierten Aufnahmeeinrichtung 5 ist in etwa senkrecht zum ebenen Bereich 16 ausgerichtet, damit die optischen Verzerrungen der Aufnahme gering sind.

Die hier als längliche, dünne Leuchtstoffröhre ausgebildete Lichtquelle 4 wird über den Ausleger 15 in einer bestimmten Position relativ zur Aufnahmeeinrichtung 5 und über den Haltearm 14 auch in einer bestimmten Position relativ zur Auflagefläche 1 gehalten. Die Lichtquelle 4 sendet Beleuchtungsstrahlen in Richtung der Auflagefläche 1 aus. So sind illustrativ ein erstes bzw. ein zweites Strahlenbündel 2 bzw. 3 von der Lichtquelle 4 ausgehend gegen die Auflagefläche 1 gerichtet.

Der ebene Bereich 16 der Auflagefläche 1 ist gemäss der Erfindung so angeordnet, dass auch bei einer gerichteten Reflexion am ebenen Bereich 16 von der Lichtquelle 4 ausgehende Beleuchtungsstrahlen nicht in die Objektivlinse 17 gelangen. So wird beispielsweise das erste Strahlenbündel 2 durch den ebenen Bereich 16 so reflektiert, dass ein deutlicher Abstand zwischen dem gerichtet reflektierten, ersten Strahlenbündel 2 und der Aufnahmeeinrichtung 5 besteht und es damit nicht mehr zur Objektivlinse 17 gelangen kann. Selbst wenn ein Objekt mit einer stark spiegelnden Oberfläche, wie z.B. ein Druckerzeugnis aus Hochglanzpapier, auf die Auflagefläche 1 aufgelegt ist, können gegen den ebenen Bereich 16 gerichtete Beleuchtungsstrahlen, beispielsweise das erste Strahlenbündel 2, keine Störreflexionen oder Spiegelungen verursachen.

Würde bei einem Gerät mit einer vollständig ebenen Auflagefläche und den in Figur 1 dargestellten Positionen der Lichtquelle 4 und der Objektivlinse 17 ein Strahlenbündel in Richtung des zweiten Strahlenbündels 3 ausgesendet und an der vollständig ebenen Auflagefläche gerichtet reflektiert, so könnte eine optische Aufnahme durch diese Störreflexion zumindest stark beeinträchtigt, wenn nicht gar verunmöglicht werden.

Bei einem erfindungsgemässen Gerät hingegen weist die Auflagefläche 1 aber den mit einer Wölbung versehenen Teilbereich 6 auf, wobei beispielsweise der Teilbereich 6 eine Wölbung in nur einer Richtung mit einem mittleren Krümmungsradius von ca. 11 Zentimeter - bei einer Länge des Haltearms 14 von ca. 50 Zentimetern und bei einem Abstand zwischen der Lichtquelle 4 und der Aufnahmeeinrichtung 5 von ca. 20 Zentimetern - aufweist. Die Flächensenkrechte 18 - welche die Richtung der gerichteten Reflexion bestimmt - ist im jeweiligen Reflexionspunkt des gewölbten Teilbereichs 6 leicht geneigt ausgerichtet. Dadurch wird erreicht, dass im Teilbereich 6 gerichtet reflektierte Beleuchtungsstrahlen nicht in Richtung der Aufnahmeeinrichtung 5 reflektiert werden. So kann effektiv und auf einfache Weise Störreflexionen bzw. Spiegelungen bei optischen Aufnahmen entgegengewirkt werden.

Wird ein Objekt, beispielsweise eine Textfolie für einen Overheadprojektor, auf das erfindungsgemässe Gerät zur optischen Aufnahme desselben auf die Auflagefläche 1 aufgelegt, so treten infolge der Wölbung im Teilbereich 6 mit zunehmendem Abstand vom ebenen Bereich 16 optische Verzerrungen auf. Hier sind aber diese optischen Verzerrungen aufgrund des grossen, mittleren Krümmungsradius von ca. 11 Zentimetern kaum wahrnehmbar. Wird die Aufnahmeeinrichtung 5 gekippt und auf den Teilbereich 6 ausgerichtet, so wirkt die Wölbung den durch die Kippstellung der Aufnahmeeinrichtung verursachten, optischen Verzerrungen sogar entgegen.

Die Ausbildung der Wölbung, hier beispielsweise der Wert des Krümmungsradius, wird - für einen Fachmann nachvollziehbar - durch die Position der Lichtquelle 4 bzw. der Aufnahmeeinrichtung 5 relativ zur Auflagefläche 1 - und damit auch relativ zueinander - bestimmt. Soll bei einem Gerät zur Aufnahme von Objekten, bei dem sich die Lichtquelle 4 in einem vorgegebenen Raumbereich von Positionen befinden kann, gemäss der Erfindung Störreflexionen bzw. Spiegelungen vorgebeugt werden, so kann im allgemeinen auch eine geeignete Wölbung dafür bestimmt werden. In der Praxis ist bei der Ausbildung der Form der Wölbung des Teilbereichs sowie bei dessen Dimensionierung und Anordnung der potentielle Positionierungsraum der Lichtquelle bzw. der Aufnahmeeinrichtung relativ zur Auflagefläche sowie die Ausbildung der Lichtquelle bzw. der Aufnahmeeinrichtung zu berücksichtigen.

Figur 2 zeigt ein weiteres Ausführungsbeispiel eines erfindungsgemässen Geräts, dessen Auflagefläche 1 neben dem gekrümmten Teilbereich 6 und dem ebenen Bereich 16 des Geräts aus Figur 1 zusätzlich einen Diapositiv-Aufnahmebereich 7 und einen Vorschaubereich 10 aufweist. Auf diesen Bereichen liegen ein erstes bzw. ein zweites Diapositiv 9 bzw. 12 auf. Die Lichtquelle 4 und der dieser zugeordnete Ausleger 15 aus Figur 1 ist in Figur 2 nicht dargestellt.

Im Gegensatz zur Darstellung aus Figur 1 ist hier die Aufnahmeeinrichtung 5 nicht senkrecht gegen den ebenen Bereich 16 der Auflagefläche 1 gerichtet. Die Aufnahmeeinrichtung 5 ist gekippt und in Richtung des Pfeiles 19 auf den Diapositiv-Aufnahmebereich 7 ausgerichtet. Der Diapositiv-Aufnahmebereich 7 ist seinerseits senkrecht zur optischen Achse der Aufnahmeeinrichtung 5 in Kippstellung ausgerichtet, um optische Verzerrungen zu minimieren. Die drehbare Befestigung der Aufnahmeeinrichtung 5 am Haltearm 14 kann in bedienungsfreundlicher Weise mit Rastelementen versehen sein. Damit wird ein wiederholbares, vorgegebenes Ausrichten der Aufnahmeeinrichtung 5 auf den Diapositiv-Aufnahmebereich 7 und ein Rückstellen auf die Ausgangsstellung entsprechend der Figur 1 auf einfache Weise ermöglicht.

Auf dem hinterleuchtet ausgebildeten Diapositiv-Aufnahmebereich 7 liegt in Figur 2 ein erstes Diapositiv 9 auf. Über eine in Form eines Anschlagwinkels ausgebildete, punktdiskrete Positionierhilfe 8 kann das Diapositiv 9 punktgenau über dem ausgezeichneten, diskreten Diapositiv-Aufnahmebereich 7 positioniert werden. Die Aufnahmeeinrichtung 5 kann auf diese Weise auf den Diapositiv-Aufnahmebereich 7 vorgegeben ausgerichtet und auf eine optische Aufnahme des Diapositivs 9 eingestellt werden.

Auf der Auflagefläche 1 ist hier an den Diapositiv-Aufnahmebereich 7 seitlich anschliessend ein ebenfalls hinterleuchteter Vorschaubereich 10 vorgesehen. Auf diesem liegt ein zweites Diapositiv 12 auf. Der Bediener des Geräts kann so mit freiem Auge das zweite Diapositiv 12 betrachten. Damit ist es beispielsweise möglich, schon vor einer Aufnahme durch die Aufnahmeeinrichtung 5 die korrekte Orientierung des zweiten Diapositivs 12 zu kontrollieren.

Durch eine an den Anschlagwinkel anschliessende, liniendiskrete Positionierhilfe 11 ist es zudem möglich, einerseits das zweite Diapositiv 12 auf den Diapositiv-Aufnahmebereich 7 zu schieben und andererseits gegebenenfalls noch weitere, auf dem Vorschaubereich 10 aufgelegte Diapositive zu betrachten.

## Patentansprüche

1. Gerät zur optischen Aufnahme von Objekten mit
- einer Auflagefläche (1) auf der ein Objekt auflegbar ist,
- einer zur Aussendung von Beleuchtungsstrahlen (2, 3) in Richtung der Auflagefläche (1) vorgesehenen Lichtquelle (4), die in einer ersten Position relativ zur Auflagefläche (1) angeordnet ist, und
- einer zur Aufnahme des aufgelegten Objekts - und gegebenenfalls zur Umwandlung der Aufnahme in elektrische Signale - vorgesehenen Aufnahmeeinrichtung (5), die in einer zweiten Position relativ zur Auflagefläche (1) angeordnet ist,
**dadurch gekennzeichnet, dass** die Auflagefläche (1) einen mit einer durch die beiden Positionen bestimmten Wölbung versehenen Teilbereich (6) aufweist, welcher so angeordnet ist, dass die Beleuchtungsstrahlen (3) vom Teilbereich (6) im Wesentlichen nur gestreut in Richtung der Aufnahmeeinrichtung reflektiert werden.

2. Gerät zur optischen Aufnahme von Objekten nach Anspruch 1, **dadurch gekennzeichnet, dass** der Teilbereich (6) nur in Richtung der Verbindungslinie zwischen der Lichtquelle (4) und der Aufnahmeeinrichtung (5) eine Wölbung aufweist.

3. Gerät zur optischen Aufnahme von Objekten nach Anspruch 1 oder 2, **dadurch gekennzeichnet, dass** die Wölbung - im Querschnitt - einem Kegelschnitt entspricht.

4. Gerät zur optischen Aufnahme von Objekten nach einem der vorhergehenden Ansprüche, **dadurch gekennzeichnet, dass** der Auflagefläche (1) ein hinterleuchteter, diskreter Diapositiv-Aufnahmebereich (7) mit einer mechanischen, punktdiskreten Positionierhilfe (8) zum punktgenauen Positionieren wenigstens eines ersten Diapositivs (9) zugeordnet ist.

5. Gerät zur optischen Aufnahme von Objekten nach Anspruch 4, **dadurch gekennzeichnet, dass** ein dem Diapositiv-Aufnahmebereich (7) benachbarter, hinterleuchteter Vorschaubereich (10), dem eine mechanische, liniendiskrete Positionierhilfe (11) zum Positionieren wenigstens eines weiteren Diapositivs (12) auf einer Linie, vorgesehen ist.

6. Gerät zur optischen Aufnahme von Objekten nach Anspruch 4 oder 5, **dadurch gekennzeichnet, dass** die Aufnahmeeinrichtung (5) relativ zur Auflagefläche (1) verdrehbar ist und die Aufnahmeeinrichtung (5) über ein Rastelement auf den diskreten Diapositiv-Aufnahmebereich (7) repetitiv ausrichtbar ist.

## Claims

1. Device for optically capturing objects, comprising
- a support surface (1) on which an object can be placed,
- a light source (4) which is provided for emitting illuminating beams (2, 3) in the direction of the support surface (1) and which, in a first position, is arranged relative to the support surface (1), and
- a capturing means (5) which is provided for capturing the positioned object - and optionally for converting the image of the captured object into electrical signals
- and which, in a second position, is arranged relative to the support surface (1),
**characterized in that** the support surface (1) has a section (6) which is provided with a curvature determined by the two positions and which is arranged in such a way that the illuminating beams (3) are reflected by the section (6) in the direction of the capturing means substantially only in a diffuse manner.

2. Device for optically capturing objects according to Claim 1, **characterized in that** the section (6) has a curvature only in the direction of the connecting line between the light source (4) and the capturing means (5).

3. Device for optically capturing objects according to Claim 1 or 2, **characterized in that** the curvature corresponds - in cross-section - to a conic section.

4. Device for optically capturing objects according to any of the preceding Claims, **characterized in that** a back-lit, discrete slide capturing region (7) having a mechanical, point-discrete positioning aid (8) for the accurate positioning of at least one first slide (9) is coordinated with the support surface (1).

5. Device for optically capturing objects according to Claim 4, **characterized in that** a back-lit preview region (10) is provided which is adjacent to the slide capturing region (7) and with which a mechanical, line-discrete positioning aid (11) for positioning at least one further slide (12) on a line is coordinated.

6. Device for optically capturing objects according to Claim 4 or 5, **characterized in that** the capturing means (5) is rotatable relative to the support surface (1), and the capturing means (5) can be repetitively oriented with the discrete slide capturing region (7) by means of a locking element.

## Revendications

1. Appareil de prise de vues optique d'objets comprenant :
- une surface de pose (1) sur laquelle un objet est susceptible d'être posée,
- une source lumineuse (4), prévue pour émettre des rayons lumineux (2, 3) dans la direction de la surface de pose (1), disposée dans une première position par rapport à la surface de pose (1), et
- un dispositif de prise de vues (5), prévu pour effectuer une prise de vues de l'objet posé - et, le cas échéant, pour convertir la prise de vues en des signaux électriques -, disposé dans une deuxième position par rapport à la surface de pose (1),
**caractérisé en ce que** la surface de pose (1) présente une zone partielle (6), munie d'une courbure déterminée par les deux positions, la zone partielle étant disposée de manière que les rayons lumineux (3) soient réfléchis par la zone partielle (6), en n'étant dispersés que dans la direction du dispositif de prise de vues (5).

2. Appareil de prise de vues optique d'objets selon la revendication 1, **caractérisé en ce que** la zone partielle (6) présente une courbure, orientée uniquement en direction de la ligne de liaison entre la source lumineuse (4) et le dispositif de prise de vues (5).

3. Appareil de prise de vues optique d'objets selon la revendication 1 ou 2, **caractérisé en ce que**, observée en vue en coupe, la courbure correspond à une section conique.

4. Appareil de prise de vues optique d'objets selon l'une des revendications précédentes, **caractérisé en ce qu'**à la surface de pose (1) est associés une zone de prise de vues de diapositive (7) discrète, rétro-éclairée, avec une aide au positionnement (8) discrète à résolution ponctuelle, mécanique, pour effectuer le positionnement, selon une précision ponctuelle, d'au moins une première diapositive (9).

5. Appareil de prise de vues optique d'objets selon la revendication 4, **caractérisé en ce qu'**une zone de présentation (10) rétroéclairée, voisine de la zone de prise de vues de diapositive (7), est prévue, à laquelle est associés une aide au positionnement (11) discrète à résolution linéaire, mécanique, pour positionner au moins une autre diapositive (12) à une ligne.

6. Appareil de prise de vues optique d'objets selon la revendication 4 ou 5, **caractérisé en ce que** le dispositif de prise de vues (5) est susceptible de tourner par rapport à la surface de pose (1) et le dispositif de prise de vues (5) est susceptible d'être orienté, de façon répétitive, par l'intermédiaire d'un élément à encliquetage, pour être pointé sur la zone de prise de vues de diapositive discrète (7).
